(19) **Europäisches Patentamt / European Patent Office / Office européen des brevets**

(11) **EP 3 290 258 B1**

(12) # EUROPEAN PATENT SPECIFICATION

(45) Date of publication and mention
of the grant of the patent:
**09.10.2019 Bulletin 2019/41**

(51) Int Cl.:
*H02M 3/16* *(2006.01)*   *H02M 3/158* *(2006.01)*
*B60L 50/50* *(2019.01)*

(21) Application number: **17188372.1**

(22) Date of filing: **29.08.2017**

(54) **ENERGY STORAGE DEVICE**

**ENERGIESPEICHERVORRICHTUNG**

**DISPOSITIF DE STOCKAGE D'ÉNERGIE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2016 RU 2016135452 U**

(43) Date of publication of application:
**07.03.2018 Bulletin 2018/10**

(73) Proprietor: **Limited Liability Company
"SMARTER"
Chelyabinsk 454021 (RU)**

(72) Inventor: **SHVED, Andrej Aleksandrovich
454021 Chelyabinsk (RU)**

(74) Representative: **Jeck, Anton
Jeck & Fleck
Patentanwälte
Klingengasse 2
71665 Vaihingen/Enz (DE)**

(56) References cited:
**US-A1- 2013 278 232     US-A1- 2015 280 559**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention is related to electrical technology, namely to autonomous electric power supply systems, and may be used mostly in vehicles.

There is a micro-hybrid device for a motor vehicle (Micro-hybrid device for motor vehicle / Masson et al. // U.S. Pat. № 7,952,223 B2 - May 31, 2011), which uses a rechargeable current source designed as a battery of electrochemical capacitors (also known as "ultracapacitor"), connected to the on-board network of an automobile using a direct current bidirectional converter with control unit, having a reference input, while the charge/discharge current of the rechargeable current source can be regulated by the reference input signal thus accumulating and returning electrical energy and corresponds to the claimed invention designation. However, the description of this device does not describe the direct current bidirectional converter circuit.

There is an automotive electrical power supply system (Automotive electrical system configuration / O'Gorman et al. // U.S. Pat. № 8,159,083 B2 - Apr. 17, 2012), which uses electrical energy storage devices. Each energy storage device consists of a rechargeable current source and bidirectional buck-boost converter, which contains a control unit, inductor, first half-bridge and second half-bridge. Each half-bridge has positive terminal, negative terminal and toggle terminal, designed to connect to either the positive or negative terminal. The negative terminal of the first half-bridge is connected to the negative terminal of the second half-bridge, the toggle terminal of the first half-bridge is connected to the toggle terminal of the second half-bridge by the inductor, the positive and negative terminals of the first and second half-bridges are the power terminals of the bidirectional buck-boost converter. Each half-bridge consists of two serially connected electronic switching devices, based on transistors whose gates are connected to the control unit. The first half-bridge is connected in parallel to the rechargeable current source by positive and negative terminals, while the second one to the vehicle's on-board network. An ultra-capacitor or an accumulator battery can be used as a rechargeable current source.

These devices regulate the charge/discharge current parameters of the rechargeable current source, which allows to accumulate and return electric energy and corresponds to the claimed invention designation. However, its description does not describe the control unit circuit of the bidirectional buck-boost converter.

The principle of the control unit for the majority of bidirectional buck-boost converters (e.g. Control circuit and method for maintaining high efficiency in a buck-boost switching regulator / Dwelley et al. // U.S. Pat. № 6,166,527 - Dec. 26, 2000) is based on the analysis of voltage values at its power terminals (buck mode, boost mode, or buck-boost mode). The buck-boost operating mode is triggered, when input and output voltage values at the converter's power terminals are nearly the same, and based on their analysis, it is impossible to make a clear choice between buck and boost operating modes.

The buck-boost operating mode causes excessive commutations of electronic switching devices, which results in additional energy losses. Electrical energy storage device must ensure minimal energy losses, therefore the buck-boost operating mode is not desirable.

There is a control unit of the buck-boost converter (Hysteretic controlled buck-boost converter / Qiu et al. // U.S. Pat. № 8,330,435 B2 - Dec. 11, 2012), consisting of: first input, supplied with voltage from the inductor's current sensor output; second input, which receives error voltage; plurality of offset voltages based on the error voltage.

The control unit selects the converter's operating mode based on the comparison of the inductor's current values with plurality of offset voltages, which helps to eliminate the buck-boost operating mode and thus reduces energy losses. The deficiency of this control unit is its complex circuitry, which is required due to a development of plurality of offset error voltages.

An inverting switching regulator is known (Publication No. US 2013/0278232 A1 of Oct. 24, 2013) comprising: interface power supply terminals, a rechargeable current source, first half-bridge, second half-bridge, an inductor, and a controller. The half bridges each contain a first switching device, a second switching device, a control input, a positive pole, a negative pole and a toggle terminal, wherein the positive pole is linked to the toggle terminal with the aid of the first switching device. The toggle terminal is linked to the negative pole with the aid of the second switching device. The first half-bridge is connected in parallel with the rechargeable current source by means of the positive and negative poles. The negative pole of the first half-bridge is connected to the negative pole of the second half-bridge. The toggle terminal of the first half-bridge is connected to the toggle terminal of the second half-bridge by means of the inductor. The plus and minus poles of the second half-bridge are interface power supply terminals. A controller generates a pulse width modulation (PWM) control value in response to a value of the output voltage signal, and the quantizer / mapper receives the PWM control value and provides a mapping.

The mode of operation of this device is based on the evaluation of the voltage values at the power terminals of the device. Based on the result of this evaluation, an operating mode is selected. When the values of the input and output voltages at the converter's power terminals are approximately equal, the buck-boost mode is excluded because the quantizer / mapper receives the PWM control value and provides mapping. Due to a deviation of the size comparison with respect to the input and output voltage values, however, one of the following operating modes occurs:

- periodic alternation of the buck mode with the bypass mode (upper two switches in conducting state);

- periodic alternation of the boost mode with the bypass mode.

The above modes cause excess commutation with electronic switches of the converter causing additional energy losses. In addition, the present device does not control the charge / discharge current size of the rechargeable current source.

A prototype of an energy storage device, based on the bidirectional buck-boost converter, closest by its design and technical nature to the claimed invention, was chosen (Bidirectional buck-boost converter / Esser // U. S. Pat. № 5,734,258 - Mar. 31, 1998). This device consists of interface power terminals, rechargeable current source, first half-bridge, second half-bridge, inductor with inductor's current sensor and control unit, while each half-bridge has control inputs, positive terminal, negative terminal and toggle terminal, designed to connect to either the positive or negative terminal depending on signals at control inputs; the first half-bridge is connected in parallel to the rechargeable current source by positive and negative terminals, the negative terminal of the first half-bridge is connected to the negative terminal of the second half-bridge, the toggle terminal of the first half-bridge is connected to the toggle terminal of the second half-bridge by the inductor, the positive and negative terminals of the second half-bridge are the interface power terminals. Each half-bridge consists of two serially connected electronic switching devices, based on the transistors, which gates are the half-bridge control inputs; a diode is coupled in parallel opposition with each switching device. An electrochemical capacitor battery is used as a rechargeable current source.

The prototype description does not describe the control unit circuit of the bidirectional buck-boost converter, but a control method is provided. This method provides for the converter's operating mode depending on the correlation of voltage values at interface power terminals and at rechargeable current source terminals:

- in those cases, where stated voltage values significantly differ, a buck operating mode or boost operating mode is selected, specified by having the toggle terminal of one of the half-bridges is permanently connected to its positive terminal, while the toggle terminal of another half-bridge periodically switches between its positive and negative terminals;
- in those cases, where stated values differ insignificantly, a buck-boost operating mode is selected, specified by having toggle terminals of both half-bridges periodically switch between its positive and negative terminals.

The deficiencies of the prototype are the following:

- the buck-boost operating mode results in additional energy losses due to the periodic switching of both half-bridges;
- required operating mode selection depending on the correlation of voltage values at interface power terminals and rechargeable current source terminals results in a complexity of the converter's control unit.

The claimed device is designed to connect, by interface power terminals, to direct current electrical network and to control the electrical energy flow through interface power terminals in order to accumulate and return it to supply high-powered intermittent loads.

The task of the claimed device is to reduce energy losses and device simplification.

The technical result consists of a minimization of switching during the operation of the device and a reduction of components and connections.

The technical result is achieved by having the claimed energy storage device, consisting of interface power terminals, rechargeable current source, first half-bridge, second half-bridge, inductor with an inductor's current sensor and control unit, while each half-bridge has a control input, positive terminal, negative terminal, and toggle terminal, designed to connect to either the positive or negative terminal depending on the signal at the control input, the first half-bridge is connected in parallel to the rechargeable current source by positive and negative terminals, the negative terminal of the first half-bridge is connected to the negative terminal of the second half-bridge, the toggle terminal of the first half-bridge is connected to the toggle terminal of the second half-bridge by the inductor, the positive and negative terminals of the second half-bridge are the interface power terminals, according to the invention, the control unit has a reference input and contains first Schmitt trigger, whose output is connected to the control input of the first half-bridge, second Schmitt trigger, whose output is connected to the control input of the second half-bridge and summation circuit, whose output is connected to the inputs of the first and second Schmitt triggers, the first input of the summation circuit is connected to the output of the inductor's current sensor, while the second input of the summation circuit is the reference input of the control unit.

Each half-bridge is designed to connect the toggle terminal to the positive terminal based on the signal H at the control input, and to the negative terminal based on signal L at the control input, the first Schmitt trigger has threshold levels $U_1$ and $U_2$ of the toggle output in condition H and L respectively, the second Schmitt trigger has threshold levels $U_3$ and $U_4$ of the toggle output in condition H and L respectively.

Threshold levels of Schmitt triggers are satisfied by inequalities:

$$U_4 < U_1 < U_2, \qquad (1)$$

$$U_4 < U_3 < U_2, \qquad (2)$$

if the output signal of the inductor's current sensor is accepted as positive when the inductor's current flows in the direction from the toggle terminal of the first half-bridge to the toggle terminal of the second half-bridge.

Threshold levels of Schmitt triggers are satisfied by inequalities:

$$U_4 > U_1 > U_2, \qquad (3)$$

$$U_4 > U_3 > U_2, \qquad (4)$$

if the output signal of the inductor's current sensor is accepted as positive when the inductor's current flows in the direction of the toggle terminal of the second half-bridge to the toggle terminal of the first half-bridge.

Inequalities (1, 2) and (3, 4) describe equivalent implementation options of the claimed device (selection of inequalities depends on the inductor's current direction, conditionally accepted as positive).

The rechargeable current source may be designed as an electrochemical capacitor battery.

The rechargeable current source may be designed as an accumulator battery.

Significant features of the claimed device to achieve the technical result are listed below.

A combination of significant features of the claimed device: "first half-bridge, second half-bridge, inductor and control unit; each half-bridge has a control input, positive terminal, negative terminal, and toggle terminal, designed to connect to either the positive or negative terminal depending on the signal at the control input; the negative terminal of the first half-bridge is connected to the negative terminal of the second half-bridge, the toggle terminal of the first half-bridge is connected to the toggle terminal of the second half-bridge by the inductor" describes a bidirectional buck-boost converter.

Significant features of the claimed device: "the control unit has a reference input and contains first Schmitt trigger, whose output is connected to the control input of the first half-bridge, second Schmitt trigger, whose output is connected to the control input of the second half-bridge and summation circuit, whose output is connected to the inputs of the first and second Schmitt triggers, the first input of the summation circuit is connected to the output of the inductor's current sensor, while the second input of the summation circuit is the reference input of the control unit" ensure the control of the current flowing through the inductor of the bidirectional buck-boost converter.

An ability to control the current flowing through the inductor of the -bidirectional buck-boost converter, combined with features: "the first half-bridge is connected in parallel to the rechargeable current source; the positive and negative terminals of the second half-bridge are the interface power terminals" ensures the operation of the claimed device in accordance with its design: control of the electrical energy flow through interface power terminals in order to accumulate and return it to supply high-powered intermittent loads.

A combination of significant features: "Each half-bridge is designed to connect the toggle terminal to the positive terminal based on the signal H, or to the negative terminal based on the signal L at the control input; the first Schmitt trigger has threshold levels $U_1$ and $U_2$ of the toggle output in condition H and L respectively; the second Schmitt trigger has threshold levels $U_3$ and $U_4$ of the toggle output in condition H and L respectively; threshold levels of Schmitt triggers are satisfied by inequalities (1, 2) if the output signal of the inductor's current sensor is accepted as positive when the inductor's current flows in the direction from the toggle terminal of the first half-bridge to the toggle terminal of the second half-bridge; threshold levels of Schmitt triggers are satisfied by inequalities (3, 4) if the output signal of the inductor's current sensor is accepted as positive when the inductor's current flows in the direction of the toggle terminal of the second half-bridge to the toggle terminal of the first half-bridge" ensures a minimum of switching during the operation of the claimed device.

A minimization of switching is ensured by the fact that the buck-boost operating mode is eliminated, since inequalities (1, 2) and (3, 4) ensure a clear choice between buck and boost modes. When there is a simultaneous reception of signals H to the logical control inputs of both half-bridges, the inductor's current increase precisely corresponds to the buck operating mode of the converter, while a current decrease corresponds to the boost operating mode of the converter.

The minimally possible switching frequency corresponds to the maximum allowed level of the inductor's current ripple levels, which is defined by threshold levels $U_1$ and $U_2$ in the buck operating mode, or by threshold levels $U_3$ and $U_4$ in the boost operating mode.

The same features simultaneously ensure the simplification of the device, since there is no need in components and connections to analyze voltage values at converter outputs.

The claimed device is shown in drawings:

| | |
|---|---|
| Fig. 1 | shows the device block diagram. |
| Fig. 2 | shows the transmitting parameter $TS_1(u_\Sigma)$ of the first Schmitt trigger and the transmitting parameter $TS_2(u_\Sigma)$ of the second Schmitt trigger. |
| Fig. 3 | depicts how the device operates and shows timing diagrams: - signal $u_\Sigma(t)$ diagram at the summation circuit output; |
| - signal $TS_1(t)$ | diagram at the first Schmitt trigger output; |

- signal $TS_2(t)$    diagram at the second Schmitt trigger output.

The storage device consists of interface power outputs 1 and 2, rechargeable current source 3, first half-bridge 4, second half-bridge 5, inductor 6 with current sensor 7 and control unit. The control unit has the reference input 8 and contains first Schmitt trigger 9, second Schmitt trigger 10 and summation circuit 11.

Each half-bridge 4 and 5 are designed to connect the toggle terminal to the positive terminal based on the signal H, or to the negative terminal based on signal L at the control input. Half-bridges 4 and 5 designs are well-known: each half-bridge has two serially connected electronic switching devices, based on the MOSFET or IGBT transistors, whose gates are linked to the half-bridge control input by drivers and logic components; a diode is coupled in parallel opposition with each switching device. The first half-bridge 4 is connected in parallel to the rechargeable current source 3 by positive and negative terminals, the negative terminal of the first half-bridge 4 is connected to the negative terminal of the second half-bridge 5, the toggle terminal of the first half-bridge 4 is connected to the toggle terminal of the second half-bridge 5 by the inductor 6, the positive and negative terminals of the second half-bridge 5 are the interface power terminals 1 and 2.

The output of the first Schmitt trigger 9 is connected to the control input of the first half-bridge 4. The output of the second Schmitt trigger 10 is connected to the control input of the second half-bridge 5. The output of the summation circuit 11 is connected to inputs of Schmitt triggers 9 and 10. The first input of the summation circuit 11 is connected to the inductor's current sensor 7 output, while the second input of the summation circuit 11 is the reference input 8 of the control unit.

The rechargeable current source 3 can be any two-terminal, which can accumulate energy when the charge current is flowing and return energy when the discharge current is flowing, e.g. an accumulator battery or electrochemical capacitor battery (ultra-capacitor).

The operation of the claimed device is reviewed as an example of an ultra-capacitor.

Conditional assumptions:

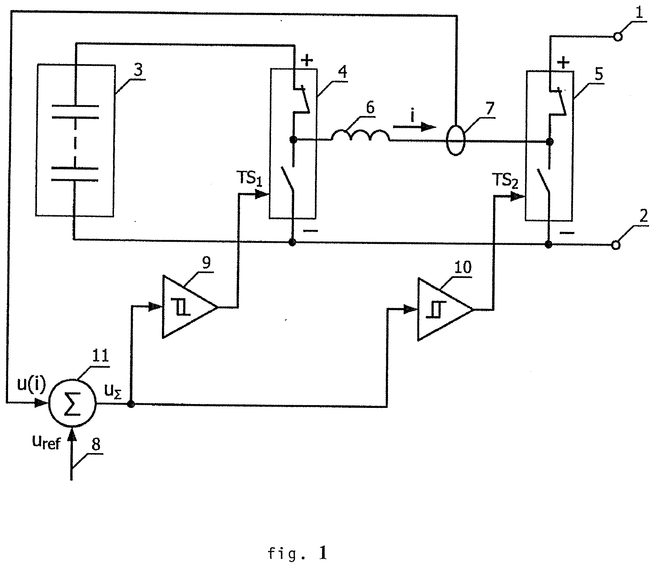

- current i of the inductor 6 is assumed positive, if it flows in the direction from the toggle terminal of the first half-bridge 4 to the toggle terminal of the second half-bridge 5 (positive flow of current i is shown on Fig. 1 with an arrow);
- signal u(i) at the sensor 7 output is a linearly increasing function of current i;
- voltages are measured relative to the connection point of negative terminals of the first and second half-bridges, if the voltage at the positive terminal of the first half-bridge exceeds the voltage at the positive terminal of the second half-bridge, then the operating mode is buck, in other case it is boost;

- the states of the claimed device are defined as: HH, LH, HL, where the first symbol corresponds to the output state of the first Schmitt trigger 9, while the second symbol corresponds to the output state of the second Schmitt trigger 10.

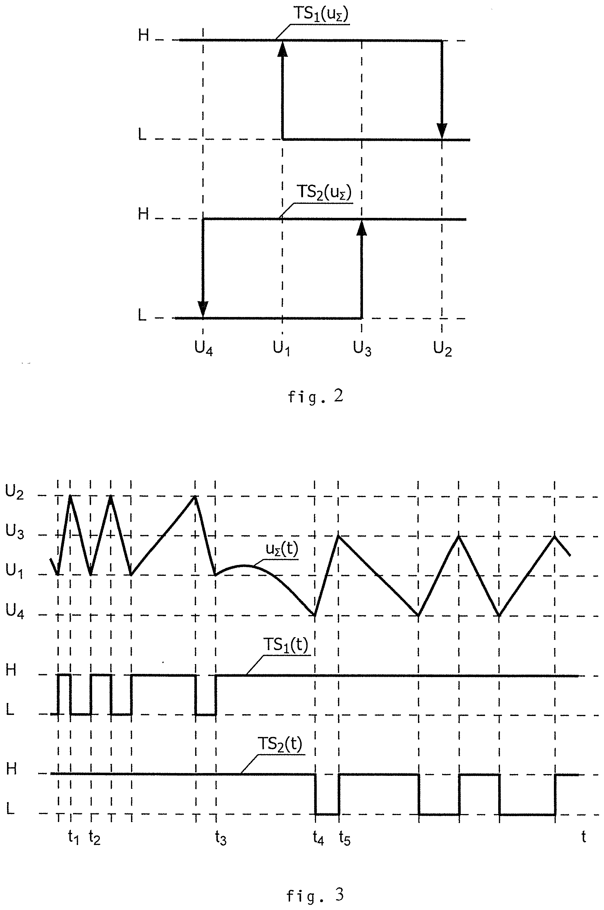

Let's assume that claimed device is in HH state, and the position of electronic switching devices of half-bridges 4 and 5 correspond to the one shown on Fig. 1: the positive terminal of the first half-bridge 4 is connected to the positive terminal of the second half-bridge 5 by the inductor 6. In state HH, current i of the inductor 6 increases in the buck mode, and decreases in the boost mode. A change in current i of the inductor leads to a corresponding change in the signal $u_\Sigma = u_{ref} + u(i)$ at the output of the summation circuit 11 and at inputs of Schmitt triggers 9 and 10. Transmitting parameters $TS_1(u_\Sigma)$, $TS_2(u_\Sigma)$ of Schmitt triggers 9 and 10 (Fig. 2) define window $U_4 \div U_2$ for the signal $u_\Sigma$, where HH state is impossible beyond its limits. In accordance with parameters $TS_1(u_\Sigma)$ and $TS_2(u_\Sigma)$, the output of the signal $u_\Sigma$ beyond window $U_4 \div U_2$ results either in a transition to LH state in the buck mode, or in HL state in the boost mode. Thus, a negative feedback is in force, which maintains the value of the signal $u_\Sigma$ within window $U_4 \div U_2$. Therefore, by changing signal $u_{ref}$ at the reference input 8, we may change signal u(i), i.e. control current i of the inductor.

If a negative current i of the inductor is supplied, then the ultra-capacitor 3 will charge; a positive current i of the inductor leads to ultra-capacitor 3 discharge.

The device operation is further clarified using the discharge example of the ultra-capacitor 3 in accordance with timing diagrams (Fig. 3).

Immediately prior to time $t_1$:

- ultra-capacitor 3 is charged and its voltage corresponds to the buck mode;
- the device is in HH state ($TS_1(t)$=H, $TS_2(t)$=H);
- current i of the inductor and signal $u_\Sigma(t)$ increase.

At time $t_1$, signal $u_\Sigma(t)$ reaches $U_2$ value - first Schmitt trigger 9 switches and signal $TS_1(t)$ transition to L state.

Between times $t_1 \div t_2$, the device is in LH state:

- the toggle terminal of the first half-bridge 4 is connected to its negative terminal;
- current i of the inductor and signal $u_\Sigma(t)$ decrease;
- at time $t_2$, signal $u_\Sigma(t)$ reaches $U_1$ value - first Schmitt trigger 9 switches and signal $TS_1(t)$ transition back to H state.

Switching cycles in the buck mode repeat until time $t_3$.

Between times $t_3 \div t_4$, the device is in HH state, but due to ultra-capacitor 3 discharge, the voltage on it becomes lower than at the positive terminal of the second half-bridge 5, which corresponds to the transition to the boost mode:

- current i of the inductor and signal $u_\Sigma(t)$ start to decrease;
- at time $t_4$, signal $u_\Sigma(t)$ reaches $U_4$ value - second Schmitt trigger 10 switches and signal $TS_2(t)$ transition to L state.

Between times $t_4 \div t_5$, the device is in HL state:

- the toggle terminal of the second half-bridge 5 is connected to its negative terminal;
- current i of the inductor and signal $u_\Sigma(t)$ increase;
- at time $t_5$, signal $u_\Sigma(t)$ reaches $U_3$ value - second Schmitt trigger 10 switches and signal $TS_2(t)$ transition to H state.

Furthermore, switching cycles repeat in the boost mode and ultra-capacitor 3 discharge continues.

The referenced example shows that the claimed device ensures a clear choice between the buck and boost modes without transitioning into buck-boost mode. The maximum allowed level of current i ripples of the inductor is defined by transmitting parameters $TS_1(u_\Sigma)$ and $TS_2(u_\Sigma)$ of Schmitt triggers 9 and 10. Furthermore, a minimally possible switching frequency is ensured, which corresponds to the stated technical task to minimize energy losses.

The control unit consists of less components than other known devices, which ensures device simplification.

**Claims**

1. An energy storage device, consisting of interface power terminals (1) (2), rechargeable current source (3), first half-bridge (4), second half-bridge (5), inductor (6) with an inductor's current sensor (7), and control unit; each half-bridge comprises first switching device, second switching device, control input, positive terminal, negative terminal, and toggle terminal, wherein the positive terminal is linked to the toggle terminal via the first switching device, the toggle terminal is linked to the negative terminal via the second switching device; the first half-bridge (4) is connected in parallel to the rechargeable current source (3) by positive and negative terminals, the negative terminal of the first half-bridge (4) is connected to the negative terminal of the second half-bridge (5), the toggle terminal of the first half-bridge (4) is connected to the toggle terminal of the second half-bridge (5) by the inductor (6), the positive and negative terminals of the second half-bridge (5) are the interface power terminals (1) (2);
**characterized in that**
the control unit has a reference input (8) and contains first Schmitt trigger (9), second Schmitt trigger (10),

and summation circuit (11); the summation circuit (11) has first input, second input, and output; the first input of the summation circuit (11) is connected to the output of the inductor's current sensor (7), where the voltage signal at the output of the inductor's current sensor (7) is a function of the inductor's current; the second input of the summation circuit (11) is the reference input (8) of the control unit; the output of the summation circuit (11) is connected to the input of the first Schmitt trigger (9) and is connected to the input of the second Schmitt trigger (10), the output of the first Schmitt trigger (9) is connected to the control input (TS1) of the first half-bridge (4), the output of the second Schmitt trigger (10) is connected to the control input (TS2) of the second half-bridge (5); each half-bridge is designed to connect its toggle terminal to its positive terminal based on signal H at its control input; each half-bridge is designed to connect its toggle terminal to its negative terminal based on signal L at its control input; the first Schmitt trigger (9) has threshold levels $U_1$ and $U_2$ of switching outputs in H and L states respectively, the second Schmitt trigger (10) has threshold levels $U_3$ and $U_4$ of switching outputs in H and L states respectively;
the threshold levels of Schmitt triggers satisfy inequalities:

$$U_4 < U_1 < U_2,$$

$$U_4 < U_3 < U_2,$$

if the output signal of the inductor's current sensor (7) is accepted as positive, when the inductor's current flows in the direction from the toggle terminal of the first half-bridge (4) to the toggle terminal of the second half-bridge (5);
the threshold levels of Schmitt triggers satisfy inequalities:

$$U_4 > U_1 > U_2,$$

$$U_4 > U_3 > U_2,$$

if the output signal of the inductor's current sensor (7) is accepted as positive, when the inductor's current flows in the direction from the toggle terminal of the second half-bridge (5) to the toggle terminal of the first half-bridge (4).

2. The device of claim 1, wherein the rechargeable current source (3) designed as an electrochemical capacitor battery.

3. The device of claim 1, wherein the rechargeable current source (3) designed as an accumulator battery.

**Patentansprüche**

1. Energiespeichervorrichtung, bestehend aus Interface-Leistungsanschlüssen (1, 2), einer wiederaufladbaren Stromquelle (3), einer ersten Halbbrücke (4), einer zweiten Halbbrücke (5), einem Induktor (6) mit einem Induktorstromsensor (7) und einer Steuereinheit, wobei jede Halbbrücke eine erste Schaltvorrichtung, eine zweite Schaltvorrichtung, einen Steuereingang, einen positiven Anschluss, einen negativen Anschluss und einen Flipflopschaltungsanschluss aufweist, wobei ferner

   - der positive Anschluss mit dem Flipflopschaltungsanschluss über die erste Schaltvorrichtung verbunden ist,
   - die erste Halbbrücke mit dem negativen Anschluss über die zweite Schaltvorrichtung verbunden ist,
   - die erste Halbbrücke (4) parallel zur wiederaufladbaren Stromquelle (3) durch den positiven Anschluss und den negativen Anschluss verbunden ist,
   - der negative Anschluss der ersten Halbbrücke (4) mit dem negativen Anschluss der zweiten Halbbrücke (5) verbunden ist,
   - der Flipflopschaltungsanschluss der ersten Halbbrücke (4) mit dem Flipflopschaltungsanschluss der zweiten Halbbrücke (5) durch den Induktor (6) verbunden ist,
   - der positive Anschluss und der negative Anschluss der zweiten Halbbrücke (5) die Interface-Leistungsanschlüsse (1, 2) sind,

   **dadurch gekennzeichnet,**
   **dass** die Steuerschaltung einen Referenzeingang (8) und einen ersten Schmitt-Trigger (9), einen zweiten Schmitt-Trigger (10) und eine Summierschaltung aufweist,
   **dass** die Summierschaltung (11) einen ersten Eingang, einen zweiten Eingang und einen Ausgang aufweist,
   **dass** der erste Eingang der Summierschaltung (11) mit dem Ausgang des Induktorstromsensors (7) verbunden ist, wobei

   - das Spannungssignal am Ausgang des Induktorstromsensors (7) eine Funktion des Induktorstroms ist,
   - der zweite Eingang der Summierschaltung (11) der Referenzeingang (8) der Steuerschaltung ist,
   - der Ausgang der Summierschaltung (11) mit dem Eingang der ersten Schmitt-Triggerschaltung (9) und mit dem Eingang der zweiten Schmitt-Triggerschaltung (10) verbunden ist,
   - der Ausgang der ersten Schmitt-Triggerschaltung (9) mit dem Steuereingang (TS1) der ersten Halbbrücke (4) verbunden ist,
   - der Ausgang des zweiten Schmitt-Triggers (10) mit dem Steuereingang (TS2) der zweiten Halbbrücke verbunden ist,
   - jede Halbbrücke derart ausgebildet ist, das ihr Flipflopschaltungsanschluss mit ihrem positiven Anschluss verbunden ist, der auf einem Signal H an ihrem Steuereingang basiert,
   - jede Halbbrücke derart ausgebildet ist, dass ihr Flipflopschaltungsanschluss mit ihrem negativen Anschluss verbunden ist, der auf einem Signal L am Steuereingang basiert,
   - der erste Schmitt-Trigger (9) Schwellwertpegel $U_1$ und $U_2$ der Schaltausgänge im entsprechenden H-Zustand und L-Zustand aufweist,
   - der zweite Schmitt-Trigger (10) Schwellwertpegel $U_3$ und $U_4$ der Schaltausgänge im entsprechenden H-Zustand und L-Zustand aufweist,
   - die Schwellwertpegel der Schmitt-Trigger folgende Ungleichungen erfüllen:

$$U_4 < U_1 < U_2,$$

$$U_4 < U_3 < U_2,$$

wenn das Ausgangssignal des Induktorstromsensors (7) als positiv angenommen wird, wenn der Induktorstrom in Richtung vom Flipflopschaltungsanschluss der ersten Halbbrücke (4) zum Flipflopschaltungsanschluss der zweiten Halbbrücke (9) fließt;

$$U_4 > U_1 > U_2,$$

$$U_4 > U_3 > U_2,$$

wenn das Ausgangssignal des Induktorstromsensors (7) als positiv angenommen wird, wenn der Induktorstrom in Richtung vom Flipflopschaltungsanschluss der zweiten Halbbrücke (5) zum Flipflopschaltungsanschluss der ersten Halbbrücke (4) fließt.

2. Vorrichtung nach Anspruch 1,
   **dadurch gekennzeichnet,**
   **dass** die wiederaufladbare Stromquelle (3) als elektrochemische Kondensatorbatterie ausgebildet ist.

**3.** Vorrichtung nach Anspruch 1,
**dadurch gekennzeichnet,**
**dass** die wiederaufladbare Stromquelle (3) als Akkumulatorbatterie ausgebildet ist.

**Revendications**

**1.** Procédé de mémoire d'énergie se composant de conduits de performance interface (1,2), d'une source de courant rechargeable (3), d'un premier demi-pont (4), d'un deuxième demi-pont (5), d'un inducteur (6) avec un capteur de courant inducteur (7) et d'une unité de commande où chaque demi-pont présente un premier procédé d'allumage, un deuxième procédé d'allumage, une entrée de commande, un conduit positif, un conduit négatif et un conduit d'allumage de bascule
où par ailleurs

   - Le conduit positif est relié au conduit d'allumage de bascule via le premier procédé d'allumage,
   - Le premier demi-pont est relié au conduit négatif via le deuxième procédé d'allumage,
   - Le premier demi-pont (4) est relié à la source de courant rechargeable (3) à travers le conduit positif et le conduit négatif,
   - Le conduit d'allumage de bascule du premier demi-pont (4) est relié au conduit d'allumage de bascule du deuxième demi-pont (5) à travers l'inducteur (6),
   - Le conduit positif et le conduit négatif du deuxième demi-pont (5) sont les conduits de performance interface (1,2),

Est caractérisé de sorte que
L'allumage de la commande présente une entrée de référence (8) qui est une première bascule de Schmitt (9), une deuxième bascule de Schmitt (10) et un allumage d'addition,
Que l'allumage d'addition (11) présente une première entrée, une deuxième entrée et une sortie,
Que la première entrée de l'allumage d'addition (11) est reliée à la sortie du capteur de courant inducteur 57)
Où

   - Le signal de tension est une fonction du courant inducteur à la sortie du capteur du courant inducteur (7),
   - la deuxième entrée de l'allumage d'addition (11) est l'entrée de référence (8) de l'allumage de commande,
   - la sortie de l'allumage d'addition (11) est reliée à l'entrée de la première bascule d'allumage Schmitt (9) et à l'entrée de la deuxième bascule d'allumage Schmitt (10),

   - la sortie de la première bascule d'allumage Schmitt (9) est reliée à l'entrée de commande (TS1) du premier demi-pont (4),
   - la sortie de la deuxième bascule Schmitt (10) est reliée à l'entrée de commande (TS2) du deuxième demi-pont,
   - chaque demi-pont est conçu de telle sorte que son conduit d'allumage de bascule est relié à son conduit positif se basant sur un signal H à son entrée de commande,
   - chaque demi-pont est conçu de telle sorte que son conduit d'allumage de bascule est relié à son conduit négatif se basant sur un signal L à l'entrée de la commande,
   - la première bascule Schmitt (9) présente un niveau de valeur-seuil $U_1$ et $U_2$ des sorties d'allumage à l'état correspondant H et L,
la deuxième bascule Schmitt (10) présente un niveau de valeur-seuil $U_3$ und $U_4$ des sorties d'allumage à l'état correspondant H et L,
   - les niveaux de valeur-seuil de la bascule Schmitt remplissent les inégalités suivantes :

$$U_4 < U_1 < U_2,$$

$$U_4 < U_3 < U_2,$$

Si le signal de sortie du capteur de courant inducteur (7) est accepté positivement si le courant inducteur coule vers la direction du conduit d'allumage de la bascule du premier demi-pont (4) au conduit d'allumage de la bascule du deuxième demi-pont (9);

$$U_4 > U_1 > U_2,$$

$$U_4 > U_3 > U_2,$$

Si le signal de sortie du capteur de courant inducteur (7) est accepté positivement si le courant inducteur coule vers la direction du conduit d'allumage de la bascule du deuxième demi-pont (5) vers le conduit d'allumage de la bascule du premier demi-pont (4),

**2.** Dispositif selon revendication 1,
est caractérisé de sorte que
La source du courant rechargeable (3) est conçue en qualité de batterie de condensateur.

**3.** Dispositif selon revendication 1,
est caractérisé de sorte que
La source de courant rechargeable (3) est conçue en qualité de batterie d'accumulateur.

fig. 1

fig. 2

fig. 3

11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7952223 B2, Masson
- US 8159083 B2, O'Gorman
- US 6166527 A, Dwelley
- US 8330435 B2, Qiu
- US 20130278232 A1
- US 5734258 A, Esser